# EUROPÄISCHE PATENTSCHRIFT

(11) **EP 3 299 332 B1**
(45) Veröffentlichungstag und Bekanntmachung des Hinweises auf die Patenterteilung: **06.11.2019**
(21) Anmeldenummer: 17190073.1
(22) Anmeldetag: 08.09.2017
(51) Int. Cl.: B66C 1/66, F16G 15/04, F16G 15/06, F16G 15/08, B60P 7/08

(54) **ANSCHLAG- ODER ZURRLASCHE, BEFESTIGUNGSSOCKEL FÜR EINE ANSCHLAG- ODER ZURRLASCHE SOWIE ANSCHLAG- ODER ZURRPUNKT MIT EINER ANSCHLAG- ODER ZURRLASCHE UND BEFESTIGUNGSSOCKEL**
RESTRICTION OR LASHING STRAP, MOUNTING SOCKET FOR SAME AND RESTRICTION OR LASHING POINT WITH A RESTRICTION OR LASHING STRAP AND MOUNTING SOCKET
PATTE D'ARRÊT OU D'ARRIMAGE, SUPPORT DE FIXATION POUR UNE PATTE D'ARRÊT OU D'ARRIMAGE AINSI QUE POINT D'ARRÊT OU D'ARRIMAGE POURVUE D'UNE PATTE D'ARRÊT OU D'ARRIMAGE ET SUPPORT DE FIXATION

(30) Priorität: 21.09.2016 DE 102016218155
(43) Veröffentlichungstag der Anmeldung: 28.03.2018
(73) Patentinhaber: RUD Ketten Rieger & Dietz GmbH u. Co. KG, 73432 Aalen (DE)
(72) Erfinder: Betzler, Michael, 73453 Abtsgmünd (DE); Smetz, Reinhard, 86720 Kleinerdlingen (DE)
(74) Vertreter: Grünecker Patent- und Rechtsanwälte PartG mbB

(56) Entgegenhaltungen:
- CN-U- 203 699 642
- FR-A1- 3 020 852
- JP-A- 2003 254 317
- JP-A- 2003 254 393
- JP-U- S56 121 078
- SU-A1- 499 175
- US-A- 4 102 124

## Beschreibung

Die Erfindung betrifft eine Anschlag- oder Zurrlasche mit einem ösen- oder hakenförmigen Einhängeabschnitt zum Einhängen eines Anschlag-, Zurr- oder Hebemittels, und mit wenigstens einem Achsstummel zur Anbringung der Anschlag- oder Zurrlasche an einem Befestigungssockel, wobei der Achsstummel zur Verrastung der Anschlag- oder Zurrlasche mit dem Befestigungssockel versenkbar ausgestaltet ist. Ferner betrifft die Erfindung einen an einer Last oder einem Träger befestigbaren Befestigungssockel für eine Anschlag- oder Zurrlasche, mit wenigstens einem Achsstummel zur Halterung der Anschlag- oder Zurrlasche, wobei der wenigstens eine Achsstummel zur Verrastung der Anschlag- oder Zurrlasche mit dem Befestigungssockel versenkbar ausgestaltet ist. Schließlich ist nach der Erfindung ein Anschlag- oder Zurrpunkt mit einem an einer Last oder einem Träger anbringbaren Befestigungssockel und einer am Befestigungssockel anbringbaren Anschlag- oder Zurrlasche vorgesehen, wobei der Befestigungssockel und die Anschlag- oder Zurrlasche über wenigstens einen Achsstummel miteinander verbunden sind.

Anschlag- und Zurrpunkte werden zum Heben, Anschlagen oder Festzurren von Lasten verwendet. So kann der Anschlag- oder Zurrpunkt auf einer Last, beispielsweise einem Maschinenteil, Container oder einem anderen beispielsweise zu Wartungszwecken zu hebenden Gegenstand angebracht sein. Dabei wird der Anschlag- oder Zurrpunkt auf der Last üblicherweise verschraubt und/oder verschweißt.

Zum Festzurren von Lasten wird der Anschlag- oder Zurrpunkt auf Plattformen, beispielsweise von Schiffen, Kraftfahrzeugen, Eisenbahnwaggons oder Anhängern, insbesondere LKWs oder LKW-Anhängern, angebracht, so dass dort Ladung transportsicher festgezurrt werden kann.

In den Einhängeabschnitt der Anschlag- oder Zurrlasche können Zurr- oder Anschlagmittel wie Gurte, Schlingen, Seile oder Ketten, aber auch Haken, Ösen, Karabiner oder Schäkel eingehängt werden.

Problematisch bei den bekannten Anschlag- oder Zurrpunkten ist der zum Teil recht hohe Aufwand, der betrieben werden muss, um eine hochbelastbare Verbindung zwischen der Last oder dem Träger auf der einen und dem Anschlag- oder Zurrpunkt auf der anderen Seite herzustellen. So beschränken die bekannten Anschlag- oder Zurrpunkte den Zugang zum Befestigungssockel, so dass dieser nur schwer verschweißt werden kann. Als aufwendig gestaltet sich bei den bekannten Anschlag- und Zurrpunkten zudem die Lackierung sowie der Korrosionsschutz des Trägers oder der Last.

Ein Schäkel mit einem verschieblichen Bolzen, der zum Öffnen des Schäkels in eine zylindrische Aufnahme bewegt werden kann, ist aus der CN 203 699 642 U bekannt. Diese Schrift offenbart einen (Ketten-)Schäkel zum Heben von Lasten. Der Schäkel weist einen Verschlussmechanismus auf, bei dem ein beweglicher Bolzen mittels einer Feder in eine Betriebsstellung gedrückt wird. An den Schenkeln des Schäkels ist eine zylindrische Aufnahme für den Bolzen angeschweißt, die auch die Feder und eine Betätigungsstange für den Bolzen aufweist. Ein Zug an der Betätigungsstange bewegt den Bolzen gegen die Federkraft in die zylindrische Aufnahme. Eine weitere schäkelartige Vorrichtung ist aus der Druckschrift FR 30 20 852 A1 bekannt.

Der Erfindung liegt folglich die Aufgabe zugrunde, einen Anschlag- oder Zurrpunkt, eine Anschlag- oder Zurrlasche für einen solchen Zurrpunkt und/oder einen Befestigungssockel für einen solchen Anschlag- oder Zurrpunkt so zu verbessern, dass sie bei hoher Belastbarkeit einfach zu montieren sowie zu demontieren und zu lackieren sind und außerdem einfach vor Korrosion geschützt werden können.

Diese Aufgabe wird durch die Bereitstellung einer Anschlag- oder Zurrlasche mit alle technischen Merkmalen, im Zusammenhang, nach Anspruch 1, und durch die Bereitstellung eines Befestigungssockels mit allen technischen Merkmalen, im Zusammenhang, nach Anspruch 8 gelöst.

Diese Lösung bietet eine Reihe von Vorteilen, weil aufgrund des versenkbaren Achsstummels die Anschlag- oder Zurrlasche vom Befestigungssockel gelöst werden kann. Somit ist es möglich, zunächst nur den Befestigungssockel an dem Träger oder der Last zu befestigen und erst anschließend die Anschlag- oder Zurrlasche zu montieren. Es steht somit mehr Platz für die Montage, beispielsweise zum Verschweißen, zur Verfügung. Außerdem kann zunächst der Befestigungssockel ohne Anschlag- oder Zurrlasche zusammen mit der Last oder dem Träger lackiert oder beispielsweise verzinkt werden. Die Montage der Anschlag- oder Zurrlasche kann erst nach der Lackierung oder Verzinkung erfolgen. Die Lackierung oder Verzinkung des Befestigungssockels wird somit nicht durch die Anschlag- oder Zurrlasche beeinträchtigt. Ein weiterer Vorteil besteht darin, dass die Anschlag- oder Zurrlasche nach dem Hebe- oder Zurrvorgang einfach durch Lösen der Verrastung wieder entfernt werden kann und somit bei Nichtgebrauch vor Beschädigung geschützt ist und auch kein gefahrenträchtiges Hindernis darstellt. Die Demontierbarkeit aufgrund des versenkbaren Achsstummels vereinfacht ferner Reparaturarbeiten. Die Wirtschaftlichkeit wird erhöht, weil die vergleichsweise teuren Anschlag- oder Zurrpunkte nur dort montiert werden können, wo sie auch tatsächlich gebraucht werden.

Die Erfindung kann durch die folgenden jeweils für sich vorteilhaften und beliebig miteinander kombinierbaren Ausgestaltungen weiter verbessert werden.

Der versenkbare Achsstummel kann in einer Aufnahmeöffnung verschieblich aufgenommen sein. In der Aufnahmeöffnung kann sich des Weiteren eine Feder befinden, welche die in Richtung der Betriebsstellung wirkende Federkraft erzeugt.

Um möglichst wenig Bauvolumen im Anschlag- oder Zurrpunkt zu beanspruchen, kann der Achsstummel axial versenkbar ausgestaltet sein.

Gemäß einer weiteren Ausgestaltung kann der wenigstens eine versenkbare Achsstummel in der Montagestellung vollständig in die Öffnung eingedrückt sein. Die Federkraft sorgt dafür, dass der wenigstens eine versenkbare Achsstummel selbsttätig in eine Rastöffnung einschnappen kann und somit selbsttätig die Anschlag- oder Zurrlasche am Befestigungssockel arretiert.

Um das Einsetzen des versenkbaren Achsstummels zu ermöglichen, kann eine aus der Anschlag- oder Zurrlasche, oder dem Befestigungssockel, weisende Stirnfläche des Achsstummels ballig oder angeschrägt sein.

Die auf dem Befestigungssockel angebrachte Anschlag- oder Zurrlasche kann bevorzugt weggeschwenkt werden, so dass sie bei Nichtgebrauch vor Beschädigungen geschützt ist und gleichzeitig kein verletzungsträchtiges Hindernis darstellt. Zum Wegschwenken ist die Anschlag- und Zurrlasche beispielsweise um den wenigstens einen Achsstummel am Befestigungssockel verschwenkbar gehalten. Bevorzugt beträgt ist die Anschlag- oder Zurrlasche um wenigstens 180° verschwenkbar. Insbesondere kann sie in ihren beiden Endpositionen auf dem Untergrund, auf dem der Befestigungssockel angebracht ist, aufliegen. Die Schwenkachse, um die die Anschlag- oder Zurrlasche verschwenkbar ist, ist dabei bevorzugt parallel zu der Oberfläche des Trägers oder der Last bzw. parallel oder quer zu einer vom Einhängeabschnitt aufgespannten Ebene ausgerichtet.

Falls es auf eine Verschwenkbarkeit von Anschlag- oder Zurrlasche und Befestigungssockel nicht ankommen sollte, kann die Anschlag- oder Zurrlasche gegenüber dem Befestigungssockel unverschwenkbar fixiert sein. Beispielsweise kann sich die Anschlag- oder Zurrlasche flächig am Befestigungssockel abstützen.

Die Anschlag- oder Zurrlasche kann eine Ausnehmung aufweisen, die seitlich von zwei Backen begrenzt ist, wobei der wenigstens eine versenkbare Achsstummel von einer Backe nach innen in die Ausnehmung vorspringt. Diese Ausgestaltung hat den Vorteil, dass bei abgenommener Anschlag- oder Zurrlasche der Achsstummel geschützt sind. Außerdem ermöglicht diese Ausgestaltung eine kleine Baugröße.

Um möglichst große Lastmomente aufnehmen zu können, ist es von Vorteil, wenn wenigstens zwei Achsstummel soweit voneinander entfernt sind, wie dies baulich möglich ist. Ein größerer Abstand zwischen den wenigstens zwei Achsstummeln kann erreicht werden, wenn diese zu einer Außenseite der Anschlag- oder Zurrlasche und/oder des Befestigungssockels hin vorspringen.

Selbstverständlich können die beiden obigen Ausgestaltungen auch miteinander kombiniert werden, indem beispielsweise von den Backen Achsstummel sowohl nach innen als auch nach außen vorspringen. Gleiches gilt natürlich auch für die Befestigungslasche, die ebensolche Backen aufweisen kann, wobei der versenkbare Achsstummel von einer Backe nach innen vorspringen kann.

Es müssen nicht sämtliche Achsstummel ausschließlich an der Anschlag- oder Zurrlasche oder ausschließlich am Befestigungssockel vorhanden sein. Es kann auch sowohl am Befestigungssockel als auch an der Anschlag- oder Zurrlasche jeweils wenigstens ein Achsstummel, insbesondere jeweils wenigstens ein versenkbarer Achsstummel, vorhanden sein.

Um den Einhängeabschnitt zu versteifen bzw. eine feste, belastbare Verankerung für den versenkbaren Achsstummel zu schaffen, kann die Anschlag- oder Zurrlasche unterhalb des Einhängeabschnittes eine Basis aufweisen, die den Einhängeabschnitt begrenzt und an der sich die wenigstens zwei Achsstummel befinden. Die Basis kann beispielsweise als eine verdickte Materialbrücke ausgestaltet sein, an deren Stirnseiten sich der Achsstummel befindet.

Die Basis kann gemäß einer weiteren Ausgestaltung mit dem Einhängeabschnitt über ein Drehlager verbunden sein, so dass Basis und Einhängeabschnitt relativ zueinander drehbar sind. Die Drehachse kann insbesondere senkrecht zu der Achse des wenigstens einen versenkbaren Achsstummels verlaufen. Eine derartige drehbare Verbindung verringert die Belastung der Achsstummel beim Heben und Festzurren, wenn sich das Anschlag- oder Zurrmittel verdrillt. Bei dieser Ausgestaltung sind die Basis und der Einhängeabschnitt separate Teile, die zusammengefügt sind.

Alternativ kann der Einhängeabschnitt auch eine Öffnung aufweisen, in die die wenigstens zwei Achsstummel ragen. Diese Bauform ist besonders leicht, da die Basis fehlt.

Der Befestigungssockel kann in einer weiteren Ausgestaltung auch zwei- oder mehrgeteilt sein, so dass jedem Achsstummel ein separat an der Last oder dem Träger zu befestigendes Teil zugeordnet ist.

In einigen Fällen ist es erwünscht, dass die Anschlag- oder Zurrlasche in einen Schacht der Last oder des Trägers versenkt werden kann, wenn sie nicht benötigt wird.

Bei dem Anschlag- oder Zurrpunkt kann die Anschlag- oder Zurrlasche entlang des Befestigungssockels verschieblich am Befestigungssockel gehalten sein, um ein solches Versenken zu ermöglichen. In einem solchem Fall kann es von Vorteil sein, wenn der Befestigungssockel mit einer kulissenförmigen Führung zur verschieblichen und verschwenkbaren Halterung wenigstens eines Achsstummels versehen ist. Die Führung kann sich insbesondere an einer Außenseite des Befestigungssockels befinden. Ist eine platzsparende Bauform erwünscht, so kann sich die Führung zwischen den oben beschriebenen Backen der Anschlag- oder Zurrlasche befinden.

Damit der einmal eingerastete versenkbare Achsstummel auch wieder gelöst werden kann, ist es von Vorteil, wenn der wenigstens eine versenkbare Achsstummel beim Anschlag- oder Zurrpunkt in einem Lagerloch oder Rastloch aufgenommen ist, das an der vom Achsstummel abgewandten Seite eine Zugangsöffnung aufweist. Die Zugangsöffnung weist bevorzugt eine kleinere lichte Weite auf als das Lagerloch, so dass das Eindringen von Schmutz und Feuchtigkeit in das Lagerloch verhindert, zumindest aber verringert werden kann. Durch die Zugangsöffnung kann beispielsweise ein Werkzeug eingeführt werden, mittels dem der Achsstummel zur Entnahme der Anschlag- oder Zurrlasche versenkt werden kann. Zum Entriegeln kann der Achsstummel beispielsweise mit einer bevorzugt koaxialen Bohrung versehen sein, die ein Innengewinde aufweist. Durch Einschrauben eines Stiftes mit komplementärem Außengewinde in die Bohrung läßt sich ein Zug aufbringen und der Achsstummel bewegen.

Im Folgenden ist die Erfindung mit Bezug auf die beigefügten Zeichnungen exemplarisch anhand von Ausführungsbeispielen näher erläutert. Der Einfachheit halber sind bei den einzelnen Ausführungsbeispiele Elemente, die einander hinsichtlich Funktion und/oder Aufbau entsprechen, mit demselben Bezugszeichen versehen.

Nach Maßgabe der obigen Ausführungen können die bei den einzelnen Ausführungsbeispielen unterschiedlichen Merkmale gegeneinander ausgetauscht werden, einzelne Merkmale einer Ausführungsform weggelassen werden oder einer Ausführungsform einzelne Merkmale hinzugefügt werden, wenn es bei einer Anwendung auf den technischen Effekt eines Merkmals ankommen sollte oder der technische Effekt eines Merkmals für die jeweilige Anwendung unbeachtlich ist.

Es zeigen:

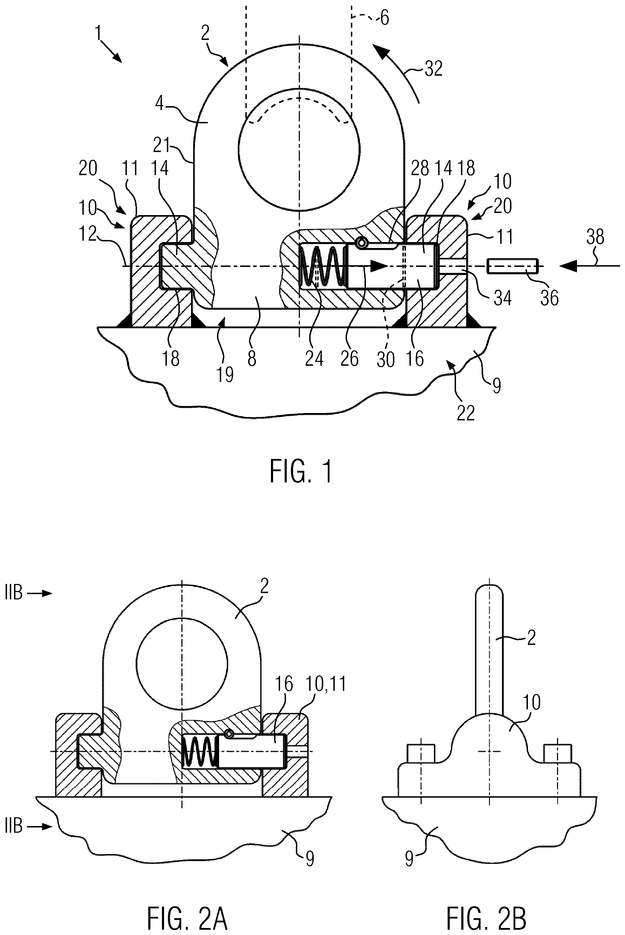

- Fig. 1 bis 10: schematische Darstellungen von Ausführungsbeispielen der Anschlag- und Zurrlasche, des Befestigungssockels sowie des Anschlag- und Zurrpunktes.

Zunächst werden der Aufbau und die Funktion der Erfindung anhand der Ausführungsform der Fig. 1 beispielhaft erläutert.

Fig. 1 zeigt einen Anschlag- oder Zurrpunkt 1. Der Anschlag- oder Zurrpunkt 1 weist eine Anschlag- oder Zurrlasche 2 auf, die mit einem haken- oder ösenförmigen Einhängeabschnitt 4 versehen ist. Der Einhängeabschnitt 4 ist in Fig. 1 lediglich zur Erläuterung geschlossen, also als Öse dargestellt. In den Einhängeabschnitt 4 kann ein Zurr-, Anschlag- oder Hebemittel 6, beispielsweise ein Gurt, eine Kette oder ein Seil, ein Karabiner, ein Haken, ein Schäkel oder eine Öse eingehängt werden. Die Anschlag- oder Zurrlasche kann unterhalb des Einhängeabschnitts 4 eine Basis 8 aufweisen, die den Einhängeabschnitt 4 begrenzt und eine verdickte Materialbrücke bildet.

Der Anschlag- oder Zurrpunkt 1 kann ferner einen Befestigungssockel 10 aufweisen, der, wie bei dem Ausführungsbeispiel der Fig. 1 auch aus mehreren, beispielsweise zwei, separaten Teilen 11 bestehen kann. Um den Fertigungsaufwand gering zu halten, sind bei einem mehrteiligen Befestigungssockel 10 die einzelnen Teile 11 bevorzugt identisch ausgestaltet.

Der Befestigungssockel 10 kann auf einer zu hebenden oder festzuzurrenden Last oder einem Träger zur Auflage von Ladung, beispielsweise einer Transportplattform, befestigt werden. Last und Träger sind unterschiedslos mit dem Bezugszeichen 9 versehen. Die Befestigung des Befestigungssockels 10 an der Last oder am Träger kann stoff-, kraft- und/oder formschlüssig erfolgen.

Die Anschlag- oder Zurrlasche 2 kann, wie bei der Ausgestaltung der Fig. 1, im Befestigungssockel 10 um eine Schwenkachse 12 verschwenkbar gehalten sein. Zur verschwenkbaren Halterung sind wenigstens zwei Achsstummel 14 vorgesehen, von denen wenigstens ein Achsstummel 16 insbesondere axial versenkbar ist. Die Achsstummel 14 können sich an der Anschlag- oder Zurrlasche 2 und/oder am Befestigungssockel 10 befinden. Die Achsstummel 14 sind in Lagerlöchern 18 des Befestigungssockels 10 unverlierbar aufgenommen. Achsstummel 14 und Lagerlöcher 18 sind koaxial zur Schwenkachse 12.

Die Anschlag- oder Zurrlasche 2 ist in eine Aussparung 19 des Befestigungssockels 10 eingesetzt. Die Achsstummel 14 bzw. die Lagerlöcher 18 befinden sich bei in die Aussparung 19 eingesetzter Anschlag- oder Zurrlasche 2 in dieser Aussparung 19. Seitlich ist die Aussparung 19 von zwei Haltebacken 20 des Befestigungssockels 10 begrenzt. Bei einem zweiteiligen Befestigungssockel 10 kann jede Haltebacke 20 von einem separaten Teil 11 gebildet sein.

Der versenkbare Achsstummel 16 ist in Fig. 1 lediglich der Anschauung wegen an der Anschlag- oder Zurrlasche 2 angebracht gezeigt. Beide Achsstummel 14, 16 ragen von einer Laschenaußenseite 21 vor. In der in Fig. 1 in durchgezogener Linie dargestellten Betriebsstellung 22 springt der versenkbare Achsstummel 16 von der Anschlag- oder Zurrlasche 2 vor und ragt in das ihm zugeordnete Lagerloch 18. Ein Federelement 24 übt eine in Richtung der Betriebsstellung 22 wirkende Kraft 26 auf den versenkbaren Achsstummel 16 auf.

Der versenkbare Achsstummel 16 ist in einer Aufnahmeöffnung 28 entlang der Schwenkachse 12 bzw. seiner Längsachse verschieblich gehalten, so dass er in einer Montagestellung 30 gegen die Federkraft 26 in die Anschlag- oder Zurrlasche 2 eingedrückt werden kann. Die Montagestellung 30 ist in Fig. 1 gestrichelt dargestellt. In der Montagestellung 30 kann die Anschlag- oder Zurrlasche 2 in den Befestigungssockel 10 eingesetzt oder aus dem Befestigungssockel 10 entfernt werden. Hierzu wird die Anschlag- oder Zurrlasche 2, wie durch den Pfeil 32 angedeutet, bei eingedrücktem Achsstummel 16 verschwenkt und entnommen.

Kommt der versenkbare Achsstummel 14 beim Einsetzen der Anschlag- oder Zurrlasche 2 in den Befestigungssockel 10 gegenüber der Aufnahmeöffnung 28 zum Liegen, so rastet er selbsttätig ein und verbindet Anschlag- oder Zurrlasche und Befestigungssockel miteinander. Der versenkbare Achsstummel 16 stellt somit einen Rastbolzen dar.

Wenigstens das dem versenkbaren Achsstummel 16 zugeordnete Lagerloch 18 kann mit einer Zugangsöffnung 34 versehen sein, die sich an der vom Achsstummel 14, 16 abgewandten Seite des Lagerlochs 18 befindet und sich außerhalb des Anschlag- oder Zurrpunktes öffnet. In die Zugangsöffnung 34 kann ein beispielsweise stabförmiges Betätigungselement 36 in Richtung des Pfeils 38 eingeführt werden, um den versenkbaren Achsstummel 16 in die Montagestellung 30 zu drücken.

Wie in Fig. 2A und Fig. 2B dargestellt ist, kann der Befestigungssockel 10 auch mit der Last oder dem Träger 9 verschraubt sein.

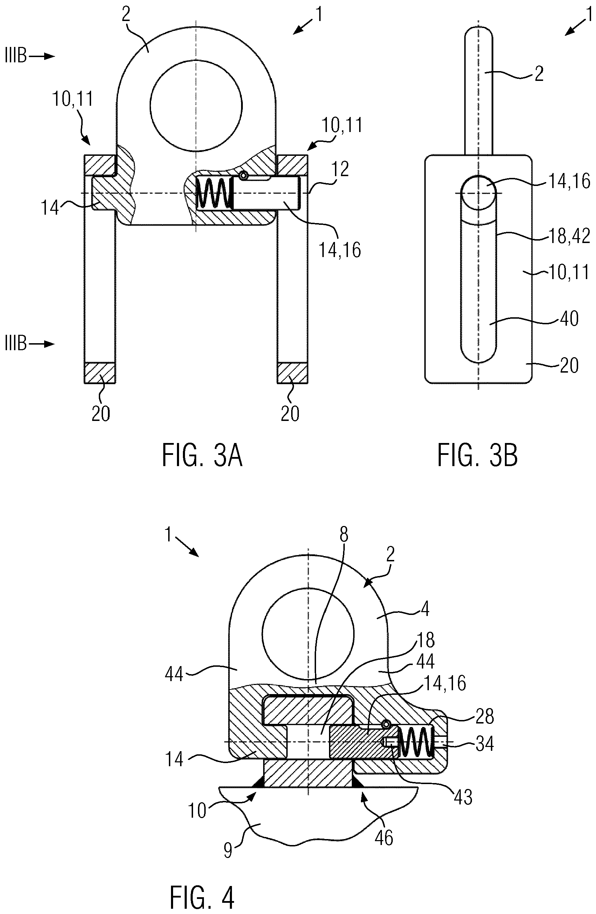

In Fig. 3A und Fig. 3B ist eine Variante des Anschlag- oder Zurrpunktes 1 mit gegenüber der Ausgestaltung der Fig. 1 verändertem Befestigungssockel 10 dargestellt. Die Anschlag- oder Zurrlasche 2 kann identisch zur Ausgestaltung der Fig. 1 sein. Fig. 3A zeigt eine schematische Vorderansicht, Fig. 3B eine schematische Seitenansicht entlang der Pfeile IIIB der Fig. 3A. Der Befestigungssockel 10 ist bei dieser Ausgestaltung mit einer kulissenartigen Führung 40 versehen, entlang der die Achsstummel 14, 16 in Richtung quer zur Schwenkachse 12 verschieblich sind. Die Anschlag- und Zurrlasche 2 ist damit gegenüber dem Befestigungssockel 10 sowohl verschwenkbar als auch verschieblich. Dies kann dazu genutzt werden, um die Anschlag- oder Zurrlasche 2 bei Nichtgebrauch versenken zu können. Erreicht wird dies dadurch, dass das Lagerloch 18 als Langloch 42 ausgestaltet ist, entlang der der jeweilige Achsstummel 14, 16 verschieblich ist. Die Führung 40 kann als Nut oder Schlitz ausgestaltet sein. Jedem Achsstummel 14, 16 ist eine eigene Führung 40 zugeordnet.

Bei der Ausgestaltung der Fig. 4 weist die Anschlag- oder Zurrlasche 2 zwei sich gegenüberliegende Backen 44 unterhalb des Einhängeabschnitts 4, insbesondere unterhalb der Basis 8 auf. Zwischen den Backen 44 ist eine Ausnehmung 46 gebildet, in die der hier einteilige Befestigungssockel 10 aufgenommen bzw. in der der Befestigungssockel 10 aufnehmbar ist. Die Achsstummel 14 ragen von den Backen 44 nach innen in die Ausnehmung 46. Wie bei den vorangegangenen Ausführungsbeispielen ist wenigstens ein Achsstummel 16 versenkbar. Zur Entnahme der Anschlag- oder Zurrlasche 2 aus dem Befestigungssockel 10 wird der versenkbare Achsstummel 16 in die ihm zugeordnete Backe 44 zurückgezogen. Hierzu kann der Befestigungssockel 10 eine Zugangsöffnung 34 aufweisen, die Zugang zu einem am Achsstummel angeordneten Haltemittel 43 für das Werkzeug 36 bietet und insbesondere mit dem Haltemittel 43 fluchtet. Das Haltemittel 43 kann beispielsweise eine Bohrung mit einem Innengewinde sein, in das ein Stift (nicht dargestellt) mit Außengewinde als Werkzeug 36 eingeschraubt wird. Am aus dem Befestigungssockel 10 ragenden Ende des Werkzeugs 36 kann dann am Achsstummel 16 gezogen und der Achsstummel 16 versenkt werden, um die Montagestellung 30 (Fig. 1) einzunehmen.

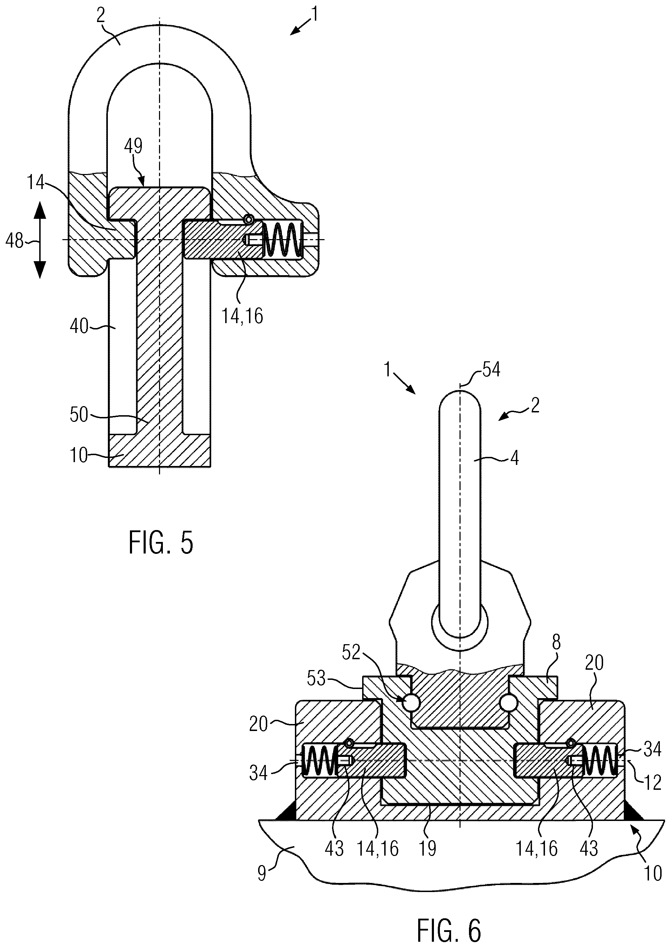

Die Anschlag- oder Zurrlasche 2 in einer Ausgestaltung wie in der Fig. 4 kann zusammen mit einem Befestigungssockel 10 verwendet werden, der eine Führung 40 bereitstellt, die neben der Verschwenkbarkeit auch eine relative Verschieblichkeit zwischen Anschlag- oder Zurrlasche 2 und dem Befestigungssockel 10 ermöglicht. Dies ist in Fig. 5 dargestellt.

Die Verschieberichtung ist exemplarisch als Doppelpfeil 48 dargestellt. Die dort gezeigte Anschlag- oder Zurrlasche 2 weist keine Basis 8 auf, so dass der Einhängeabschnitt 4 nicht vollständig geschlossen ist. Die Anschlag- oder Zurrlasche 2 weist eine Öffnung 49 auf, in die die Achsstummel 14, 16 ragen. Die Öffnung 49 ist von Backen 44 begrenzt, in denen sich die Achsstummel 14, 16 befinden. Alternativ kann die Anschlag- oder Zurrlasche 2 bei der in Fig. 5 dargestellten Ausgestaltung auch, wie in Fig. 4, mit einer Basis 8 versehen sein, so dass der Einhängeabschnitt 4 vollständig geschlossen ist. Die Anschlag- oder Zurrlaschen 2 sind mit oder ohne Basis 8 bevorzugt identisch verwendbar.

Um mit nach innen in die Ausnehmung 46 vorspringendem Achsstummel 14, 16 eine Verschieblichkeit 48 der Anschlag- oder Zurrlasche 2 entlang des Befestigungssockels 10 zu ermöglichen, ist auch in Fig. 5 das Lagerloch 18 kulissenförmig verlängert. Eine Wand 50 des Befestigungssockels 10, wie in Fig. 5 dargestellt, die sich bei montierter Anschlag- oder Zurrlasche 2 zwischen den Achsstummeln 14, 16 befindet, ist nicht zwingend notwendig. Die Führung 40 kann wieder als Nut oder Durchgangsöffnung ausgestaltet sein.

Wie Fig. 6 zeigt, müssen sich die Achsstummel 14, 16 nicht an der Anschlag- oder Zurrlasche 2, sondern können sich auch am Befestigungssockel 10 befinden. Sie können insbesondere von den Haltebacken 20 nach innen in die Aussparung 19 ragen. Zudem können auch zwei oder mehr Achsstummel 14 als versenkbare Achsstummel 16 ausgebildet sein.

In einer weiteren Variante kann, wie ebenfalls in Fig. 6 gezeigt, der Einhängeabschnitt 4 gegenüber der Basis 8 verdrehbar sein. Bei dieser Ausgestaltung ist die Basis 8 ein separates Teil, das über ein Drehlager 52 mit dem Einhängeabschnitt 4 verbunden ist. Der versenkbare Achsstummel 16 muss zudem nicht zur verschwenkbaren Lagerung der Anschlag- oder Zurrlasche am Befestigungssockel 10 dienen, sondern kann ausschließlich der Verrastung und Halterung der Anschlag- und Zurrlasche 2 am Befestigungssockel 10 dienen. So kann sich beispielsweise ein Kragen 53 der Anschlag- oder Zurrlasche 2 auf dem Befestigungssockel 10 abstützen und ein Verschwenken blockieren. Eine Ausrichtung der Anschlag- oder Zurrlasche 2 erfolgt dann beispielsweise durch die relative Verdrehbarkeit zwischen dem Einhängeabschnitt 4 und der Basis 8. Selbstverständlich kann auch auf den Kragen verzichtet werden, und eine verschwenkbare Lagerung der Anschlag- oder Zurrlasche 2 um die Schwenkachse 12 und eine Verdrehung des Einhängeabschnitts 4 um eine zur Schwenkachse 12 bevorzugt senkrecht verlaufende Drehachse 54 ermöglicht sein, um eine hohe Beweglichkeit des Anschlag- und Zurrpunktes 1 zu gestatten. Falls die Anschlag- oder Zurrlasche 2 nicht verschwenkt werden muss, kann auf einen Kreisquerschnitt der Achsstummel 14, 16 und der Lagerlöcher 18, wie er bei den vorangegangenen Ausführungsbeispielen vorhanden ist, verzichtet werden. In diesem Fall kann auch ein polygonaler oder anderer nicht-kreisförmiger Querschnitt verwendet werden, der um die Längsachse der Achsstummel einen Formschluss bildet.

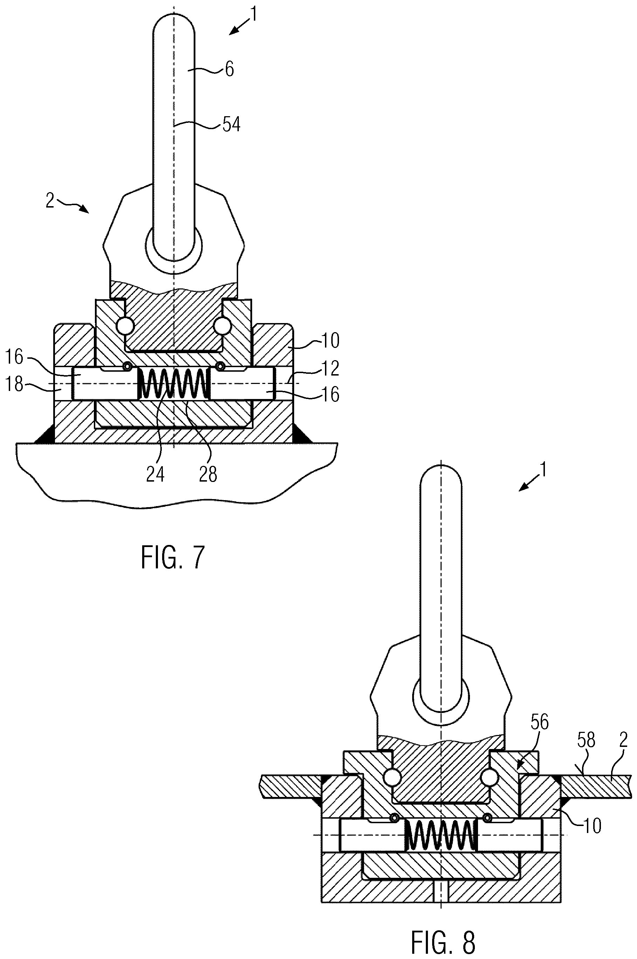

In Fig. 7 ist eine Variante der Fig. 6 dargestellt, bei der zwei versenkbare Achsstummel 16 in einer bevorzugt als Durchgangsöffnung ausgestalteten Aufnahmeöffnung 28 gemeinsam mit einem einzelnen Federelement 24 angeordnet sind. Auch hier kann die Anschlag- und Zurrlasche 2 gegenüber dem Befestigungssockel 10 entweder nur verdrehbar oder um die Achsen 12 und 54 sowohl verdrehbar als auch verschwenkbar sein.

Wie Fig. 8 zeigt, muss der Befestigungssockel 10 nicht auf eine Oberfläche 58 der Last oder des Trägers 9 aufgesetzt sein, wie in den vorhergehenden Figuren. Er kann auch in eine Öffnung 56 in der Last oder im Träger 9 eingesetzt sein, so dass der Befestigungssockel 10 bündig mit der Oberfläche 58 der Last oder des Trägers abschließt. Dies kann bei sämtlichen obige Ausführungsformen erfolgen.

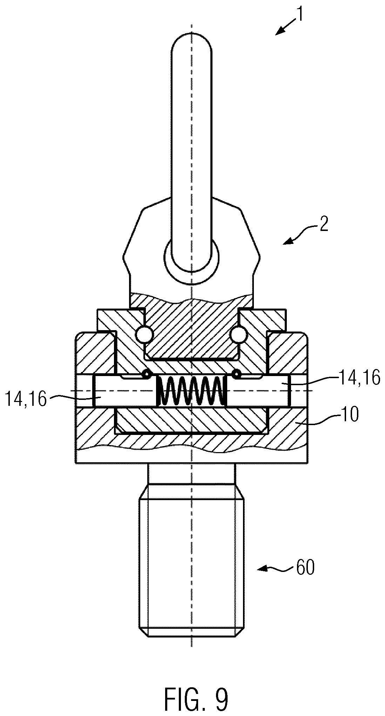

Nach Fig. 9 kann der Befestigungssockel 10 mit einem Befestigungsabschnitt 60, beispielsweise einem Gewindeabschnitt, versehen sein, um ihn an der Last oder dem Träger 9 festzuschraiben.

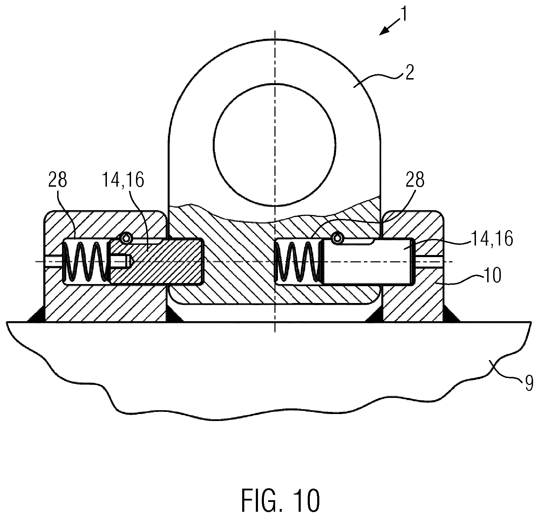

Schließlich kann auch eine Teilmenge der Achsstummel 14, 16 des Anschlag- oder Zurrpunktes 1 an der Anschlag- oder Zurrlasche 2 und der Rest der Achsstummel 14, 16 am Befestigungssockel 10 unverlierbar angebracht sein, wie Fig. 10 beispielhaft zeigt.

Um große Haltekräfte zu erzielen, können auch mehr als zwei Achsstummel 14 vorhanden sein.

### Bezugszeichenliste

- 1: Anschlag- oder Zurrpunkt
- 2: Anschlag- oder Zurrlasche
- 4: Einhängeabschnitt
- 6: Zurr-, Anschlag- oder Hebemittel
- 8: Basis
- 9: Last bzw. Träger
- 10: Befestigungssockel
- 11: Teil des Befestigungssockels
- 12: Schwenkachse
- 14: Achsstummel
- 16: versenkbarer Achsstummel
- 18: Lagerloch
- 19: Aussparung
- 20: Haltebacken
- 21: Laschenaußenseite
- 22: Betriebsstellung
- 24: Federelement
- 26: Federkraft
- 28: Aufnahmeöffnung
- 30: Montagestellung
- 32: Pfeil
- 34: Zugangsöffnung
- 36: Betätigungselement
- 38: Pfeil
- 40: Führung
- 42: Langloch
- 43: Haltemittel
- 44: Backe
- 46: Ausnehmung
- 48: Doppelpfeil
- 49: Öffnung
- 50: Wand
- 52: Drehlager
- 53: Kragen
- 54: Drehachse
- 56: Öffnung in der Last oder im Träger
- 58: Oberfläche
- 60: Befestigungsabschnitt

## Patentansprüche

1. Anschlag- oder Zurrlasche (2) mit einem ösen- oder hakenförmigen Einhängeabschnitt (4) zum Einhängen eines Anschlag-, Zurr- oder Hebemittels (6), und mit wenigstens einem Achsstummel (14, 16) zur Anbringung der Anschlag- oder Zurrlasche an einem Befestigungssockel (10), wobei der Achsstummel (16) zur Verrastung der Anschlag- oder Zurrlasche (2) mit dem Befestigungssockel (10) versenkbar ausgestaltet ist, wobei der wenigstens eine versenkbare Achsstummel (16) in einer Betriebsstellung (22) von der Anschlag- oder Zurrlasche (2) vorspringt und in einer Montagestellung (30) gegen eine Federkraft (26) in die Anschlag- oder Zurrlasche (2) eingedrückt ist.

2. Anschlag- oder Zurrlasche (2) nach Anspruch 1, wobei wenigstens zwei Achsstummel (14, 16) vorgesehen sind, von denen wenigstens ein Achsstummel (16) versenkbar ist.

3. Anschlag- oder Zurrlasche (2) nach Anspruch 1 oder 2, wobei die Anschlag- oder Zurrlasche (2) eine Ausnehmung (46) aufweist, die seitlich von zwei Backen (44) begrenzt ist, und dass der wenigstens eine versenkbare Achsstummel (16) von wenigstens einer Backe (44) nach innen in die Ausnehmung (46) nach außen vorspringt.

4. Anschlag- oder Zurrlasche (2) nach einem der Ansprüche 1 bis 3, wobei der wenigstens eine versenkbare Achsstummel (16) von einer Laschenaußenseite (21) der Anschlag- oder Zurrlasche (2) vorspringt.

5. Anschlag- oder Zurrlasche (2) nach einem der Ansprüche 1 bis 4, wobei unterhalb des Einhängeabschnitts (4) eine Basis (8) vorhanden ist, die den Einhängeabschnitt (4) begrenzt und an der sich der wenigstens eine versenkbare Achsstummel (16) befindet.

6. Anschlag- oder Zurrlasche (2) nach Anspruch 5, wobei die Basis (8) und der Einhängeabschnitt (4) über ein Drehlager (52) drehbar miteinander verbunden sind.

7. Anschlag- oder Zurrlasche (2) nach einem der Ansprüche 1 bis 6, wobei der Einhängeabschnitt (4) eine Öffnung (49) aufweist, in die der wenigstens eine versenkbare Achsstummel (16) ragt.

8. An einer Last (9) oder einem Träger (9) befestigbarer Befestigungssockel (10) für eine Anschlag- oder Zurrlasche (2), mit wenigstens einem Achsstummel (14, 16) zur Halterung der Anschlag- oder Zurrlasche (2), wobei der wenigstens eine Achsstummel (16) zur Verrastung der Anschlag- oder Zurrlasche (2) mit dem Befestigungssockel (10) versenkbar ausgestaltet ist, wobei der wenigstens eine versenkbare Achsstummel (16) in einer Betriebsstellung (22) vom Befestigungssockel (10) vorspringt und in einer Montagestellung (22) gegen eine Federkraft (26) in den Befestigungssockel (10) eingedrückt ist.

9. Befestigungssockel (10) nach Anspruch 8, wobei wenigstens zwei Achsstummel (14, 16) vorgesehen sind, von denen wenigstens ein Achsstummel (16) versenkbar ist.

10. Befestigungssockel (10) nach Anspruch 8 oder 9, wobei der Befestigungssockel (10) eine Aussparung (19) aufweist, die seitlich von zwei Haltebacken (20) begrenzt ist, und dass der wenigstens eine versenkbare Achsstummel (16) von einer Haltebacke (20) nach innen in die Aussparung (19) oder nach außen vorspringt.

11. Befestigungssockel (10) nach einem der Ansprüche 8 bis 10, wobei der wenigstens eine versenkbare Achsstummel (16) aus einer Sockelaußenseite (56) des Befestigungssockels (10) ragt.

12. Befestigungssockel (10) nach einem der Ansprüche 8 bis 11, wobei der Befestigungssockel mit einer kulissenförmigen Führung (40) zur verschieblichen Halterung der Anschlag- und Zurrlasche (2) versehen ist.

13. Anschlag- oder Zurrpunkt (1) mit einem an einer Last (9) oder einem Träger (9) anbringbaren Befestigungssockel (10) und einer am Befestigungssockel (10) anbringbaren Anschlag- oder Zurrlasche (2), wobei der Befestigungssockel (10) und die Anschlag- oder Zurrlasche (2) über wenigstens einen Achsstummel (14, 16) miteinander verbunden sind, wobei der Achsstummel (16) zur Verrastung von Anschlag- oder Zurrlasche (2) und Befestigungssockel (10) versenkbar ausgestaltet ist, wobei die Anschlag- oder Zurrlasche (2) nach einem der Ansprüche 1 bis 7 und/oder der Befestigungssockel (10) nach einem der Ansprüche 8 bis 12 ausgebildet ist.

14. Anschlag- oder Zurrpunkt (1) nach Anspruch 13, wobei die Anschlag- oder Zurrlasche (2) gegenüber dem Befestigungssockel (10) um die Achsstummel (14) verschwenkbar gehalten ist.

15. Anschlag- oder Zurrpunkt (1) nach Anspruch 13 oder 1 wobei die Anschlag- oder Zurrlasche (2) entlang des Befestigungssockels (10) verschieblich am Befestigungssockel (10) gehalten ist.

## Claims

1. Stop or lashing shackle (2) having a loop-like or hook-like suspension portion (4) for suspending a stop, lashing or lifting means (6), and having at least one axle stub (14, 16) for attaching the stop or lashing shackle to a mounting base (10), wherein the axle stub (16) is retractable in order to lock the stop or lashing shackle (2) to the mounting base (10), wherein the at least one retractable axle stub (16), in an operating position (22), protrudes from the stop or lashing shackle (2) and, in an assembly position (30), is pushed into the stop or lashing shackle (2) counter to a spring force (26).

2. Stop or lashing shackle (2) according to claim 1, wherein at least two axle stubs (14, 16) are provided, of which at least one axle stub (16) is retractable.

3. Stop or lashing shackle (2) according to either claim 1 or claim 2, wherein the stop or lashing shackle (2) has a recess (46) which is delimited laterally by two jaws (44), and wherein the at least one retractable axle stub (16) protrudes from at least one jaw (44) inwardly into the recess (46) or outwardly.

4. Stop or lashing shackle (2) according to any of claims 1 to 3, wherein the at least one retractable axle stub (16) protrudes from a shackle outer side (21) of the stop or lashing shackle (2).

5. Stop or lashing shackle (2) according to any of claims 1 to 4, wherein there is a base (8) below the suspension portion (4) which delimits the suspension portion (4) and at which the at least one retractable axle stub (16) is located.

6. Stop or lashing shackle (2) according to claim 5, wherein the base (8) and the suspension portion (4) are rotatably connected to one another via a pivot bearing (52).

7. Stop or lashing shackle (2) according to any of claims 1 to 6, wherein the suspension portion (4) has an opening (49) into which the at least one retractable axle stub (16) protrudes.

8. Mounting base (10), which can be attached to a load (9) or a carrier (9), for a stop or lashing shackle (2), having at least one axle stub (14, 16) for retaining the stop or lashing shackle (2), wherein the at least one axle stub (16) is retractable in order to lock the stop or lashing shackle (2) to the mounting base (10), wherein the at least one retractable axle stub (16), in an operating position (22), protrudes from the mounting base (10) and, in an assembly position (22), is pushed into the mounting base (10) counter to a spring force (26).

9. Mounting base (10) according to claim 8, wherein at least two axle stubs (14, 16) are provided, of which at least one axle stub (16) is retractable.

10. Mounting base (10) according to either claim 8 or claim 9, wherein the mounting base (10) has a recess (19) which is delimited laterally by two holding jaws (20), and wherein the at least one retractable axle stub (16) protrudes from a holding jaw (20) inwardly into the recess (19) or outwardly.

11. Mounting base (10) according to any of claims 8 to 10, wherein the at least one retractable axle stub (16) protrudes from a base outer side (56) of the mounting base (10).

12. Mounting base (10) according to any of claims 8 to 11, wherein the mounting base is provided with a slot-like guide (40) for displaceably retaining the stop and lashing shackle (2).

13. Stop or lashing point (1) having a mounting base (10) which can be attached to a load (9) or a carrier (9) and a stop or lashing shackle (2) which can be attached to the mounting base (10), wherein the mounting base (10) and the stop or lashing shackle (2) are interconnected via at least one axle stub (14, 16), wherein the axle stub (16) is retractable in order to lock the stop or lashing shackle (2) and the mounting base (10), wherein the stop or lashing shackle (2) is designed according to any of claims 1 to 7 and/or the mounting base (10) is designed according to any of claims 8 to 12.

14. Stop or lashing point (1) according to claim 13, wherein the stop or lashing shackle (2) is held so as to pivot about the axle stub (14) relative to the mounting base (10).

15. Stop or lashing point (1) according to either claim 13 or claim 1, wherein the stop or lashing shackle (2) is held on the mounting base (10) so as to be displaceable along the mounting base (10).

## Revendications

1. Patte d'accrochage ou d'arrimage (2), comprenant un tronçon d'accrochage (4) en forme d'anneau ou de crochet, pour y accrocher un moyen d'accrochage, d'arrimage ou de levage (6), et comprenant au moins un tourillon d'axe (14, 16) destiné à assurer le montage de la patte d'accrochage ou d'arrimage (2) sur un socle de fixation (10), le tourillon d'axe (16) étant réalisé de manière escamotable pour assurer un enclenchement de la patte d'accrochage ou d'arrimage (2) avec le socle de fixation (10),
patte d'accrochage ou d'arrimage dans laquelle ledit au moins un tourillon d'axe (16) escamotable fait saillie de la patte d'accrochage ou d'arrimage (2) dans une position de service (22), et est enfoncée, à l'encontre d'une force de ressort (26), dans la patte d'accrochage ou d'arrimage (2), dans une position de montage (30).

2. Patte d'accrochage ou d'arrimage (2) selon la revendication 1, dans laquelle sont prévus au moins deux tourillons d'axe (14, 16), dont au moins un tourillon d'axe (16) est escamotable.

3. Patte d'accrochage ou d'arrimage (2) selon la revendication 1 ou la revendication 2, dans laquelle la patte d'accrochage ou d'arrimage (2) présente un évidement (46), qui est délimité latéralement par deux joues (44), et ledit au moins un tourillon d'axe escamotable (16) fait saillie d'au moins une joue (44) vers l'extérieur, à l'intérieur de l'évidement (46).

4. Patte d'accrochage ou d'arrimage (2) selon l'une des revendications 1 à 3, dans laquelle ledit au moins un tourillon d'axe escamotable (16) fait saillie d'un côté extérieur de patte (21) de la patte d'accrochage ou d'arrimage (2).

5. Patte d'accrochage ou d'arrimage (2) selon l'une des revendications 1 à 4, dans laquelle sous le tronçon d'accrochage (4), est prévue une base (8), qui délimite le tronçon d'accrochage (4), et dans laquelle se trouve ledit au moins un tourillon d'axe escamotable (16).

6. Patte d'accrochage ou d'arrimage (2) selon la revendication 5, dans laquelle la base (8) et le tronçon d'accrochage (4) sont reliés mutuellement de manière rotative, par l'intermédiaire d'un palier de rotation (52) .

7. Patte d'accrochage ou d'arrimage (2) selon l'une des revendications 1 à 6, dans laquelle le tronçon d'accrochage (4) présente une ouverture (49) dans laquelle s'engage ledit au moins un tourillon d'axe escamotable (16).

8. Socle de fixation (10) pouvant être fixé à une charge (9) ou à un support (9) et destiné à une patte d'accrochage ou d'arrimage (2), comprenant au moins un tourillon d'axe (14, 16) pour assurer le maintien de la patte d'accrochage ou d'arrimage (2), ledit au moins un tourillon d'axe (16) étant réalisé de manière escamotable pour assurer un enclenchement de la patte d'accrochage ou d'arrimage (2) avec le socle de fixation (10),
socle de fixation dans lequel ledit au moins un tourillon d'axe escamotable (16) fait saillie du socle de fixation (10) dans une position de service (22), et est enfoncée, à l'encontre d'une force de ressort (26), dans le socle de fixation (10), dans une position de montage (30).

9. Socle de fixation (10) selon la revendication 8, dans lequel sont prévus au moins deux tourillons d'axe (14, 16) dont au moins un tourillon d'axe (16) est escamotable.

10. Socle de fixation (10) selon la revendication 8 ou la revendication 9, dans lequel le socle de fixation (10) présente un creux (19), qui est délimité latéralement par deux joues de maintien (20), et ledit au moins un tourillon d'axe escamotable (16) fait saillie d'une joue latérale (20) vers l'intérieur dans le creux (19), ou vers l'extérieur.

11. Socle de fixation (10) selon l'une des revendications 8 à 10, dans lequel ledit au moins un tourillon d'axe escamotable (16) fait saillie d'un côté extérieur de socle (56) du socle de fixation (10).

12. Socle de fixation (10) selon l'une des revendications 8 à 11, dans lequel le socle de fixation est doté d'un guide (40) en forme de coulisse pour le maintien coulissant de la patte d'accrochage ou d'arrimage (2).

13. Point d'accrochage ou d'arrimage (1) comprenant un socle de fixation (10) pouvant être rapporté sur une charge (9) ou un support (9), et une patte d'accrochage ou d'arrimage (2) pouvant être montée sur le socle de fixation (10), le socle de fixation (10) et la patte d'accrochage ou d'arrimage (2) étant reliés mutuellement par l'intermédiaire d'au moins un tourillon d'axe (14, 16),
point d'accrochage ou d'arrimage dans lequel le tourillon d'axe (16) pour l'enclenchement de la patte d'accrochage ou d'arrimage (2) et le socle de fixation (10), est d'une conception escamotable, la patte d'accrochage ou d'arrimage (2) étant réalisée selon l'une des revendications 1 à 7, et/ou le socle de fixation (10) étant réalisé selon l'une des revendications 8 à 12.

14. Point d'accrochage ou d'arrimage (1) selon la revendication 13, dans lequel la patte d'accrochage ou d'arrimage (2) est maintenue de manière à pouvoir pivoter, autour des tourillons d'axe (14), par rapport au socle de fixation (10).

15. Point d'accrochage ou d'arrimage (1) selon la revendication 13 ou la revendication 14, dans lequel la patte d'accrochage ou d'arrimage (2) est maintenue sur le socle de fixation (10), de manière à pouvoir coulisser le long du socle de fixation (10).
